# EUROPEAN PATENT APPLICATION

(11) **EP 2 535 818 A1**
(43) Date of publication of application: **19.12.2012**
(21) Application number: 10845216.0
(22) Date of filing: 08.02.2010
(51) Int. Cl.: G06F 11/22

(54) **ERROR GENERATION INDICATOR CIRCUIT, STORAGE DEVICE, INFORMATION PROCESSING DEVICE AND CONTROL METHOD OF ERROR GENERATION INDICATOR CIRCUIT**

(71) Applicant: Fujitsu Limited, Kawasaki-shi, Kanagawa 211-8588 (JP)
(72) Inventor: ASAKAI, Hiroshi, Kawasaki-shi Kanagawa 211-8588 (JP)
(74) Representative: HOFFMANN EITLE
(86) International application number: PCT/JP2010/051811
(87) International publication number: WO 2011/096083

(57) **Abstract**

An error generation condition determination part determining whether or not an instruction execution part that executes an instruction from a processor meets an error generation condition; a determination direction part, when an error setting direction that directs to set an error has been input, outputting a determination direction to cause the error generation condition determination part to determine whether or not the instruction execution part meets the error generation condition, and, in a case where the error generation condition is not met when the error setting direction has been input, again outputting, after a predetermined time has elapsed from the output of the determination direction, the determination direction to the error generation condition determination part; and an error generation direction output part outputting an error generation direction to the instruction execution part in a case where the instruction execution part meets the error generation condition by determination of the error generation condition determination part are included.

## Description

### TECHNICAL FIELD

The present invention is related to an error generation direction circuit, a storage unit, an information processing apparatus and a control method of an error generation direction circuit.

### BACKGROUND ART

A pseudo trouble generation method of generating various pseudo troubles in a logic circuit of a processor is known. According to a pseudo trouble generation method, processor state information indicating a state of a processor and a trouble timing condition indicating a condition for a timing to generate a pseudo trouble are compared, and a comparison result is masked by a pseudo trouble insertion timing mask. Thus, the pseudo trouble insertion timing mask only selects a condition of trouble insertion timing conditions to be set. As a result, a pseudo trouble insertion timing is determined, and when a designated condition is met, a pseudo trouble is inserted into a designated position in a logic circuit.

Further, a different computer instruction pseudo execution method is known in which an instruction of a different-type computer having a different architecture is executed in a pseudo manner. According to the method, in a certain computer, an instruction (target instruction) of a second computer having an architecture different from the first computer, including operations at a time of error occurrence and error information obtained at a time of error occurrence, can be faithfully realized in the first computer. As a result, in a case where an instruction of a different-type computer having a different architecture is to be executed in a pseudo manner, information equivalent to error information of the different-type computer which is necessary can be obtained as error information of a time of occurrence of an operation error interrupt.

### PRIOR ART REFERENCE

### PATENT REFERENCE

Patent reference No. 1: Japanese Laid-Open Patent Application No. 3-255543
Patent reference No. 2: Japanese Laid-Open Patent Application No. 5-346872

### SUMMARY OF THE INVENTION

### PROBLEM TO BE SOLVED BY THE INVENTION

In a case where an error is generated in an instruction execution part that executes an instruction of a processor, it has been difficult to also generate an error when an error generation condition is met and at a timing different from a timing at which the error generation condition has been met.

### MEANS FOR SOLVING THE PROBLEM

An error generation direction circuit determines when an error setting direction has been input whether or not an instruction execution part that executes an instruction from a processor meets an error generation condition. In a case where the error generation condition is not met when the error setting direction has been input, the error generation direction circuit again determines after a predetermined time has elapsed whether or not the instruction execution part meets the error generation condition, and in a case where the error generation condition is met, the error generation direction circuit outputs an error generation direction to the instruction execution part.

### ADVANTAGEOUS EFFECTS OF THE INVENTION

According to the present invention, it is also possible to output an error generation direction when an instruction execution part meets an error generation condition and at a timing different from a timing at which the instruction execution part has met the error generation condition. Therefore, no error occurs in a case where the error generation condition is not met, and it is possible to test for operations of a system for an error that occurs at a timing after a time has elapsed after the error generation condition has been met.

### BRIEF DESCRIPTION OF DRAWINGS

FIG. 1 is a block diagram depicting a CPU and a storage unit included in a computer.
FIG. 2 is a time chart depicting an operation example in the storage unit depicted in FIG. 1.
FIG. 3 is a flowchart depicting relationships between error generation timings and types of errors generated.
FIG. 4 is a block diagram depicting a CPU and a storage unit included in a computer according to an embodiment.
FIG. 5 is a time chart depicting an operation example in the storage unit depicted in FIG. 4.
FIG. 6 is a circuit diagram depicting a configuration example of an instruction state reporting circuit described in FIG. 4.
FIG. 7 is a flowchart depicting a flow of operations of an error generation direction part of FIG. 4.
FIG. 8 is a block diagram depicting a configuration example of the CPU of FIG. 4.
FIG. 9 is a block diagram depicting a configuration example of an instruction execution part of FIG. 4.
FIG. 10 is a time chart depicting an operation example (1) of the instruction execution part of FIG. 4.
FIG. 11 is a time chart depicting an operation example (2) of the instruction execution part of FIG. 4.
FIG. 12 is a circuit diagram (1) depicting a configuration example of the error generation direction part of FIG. 4.
FIG. 13 is a circuit diagram (2) depicting a configuration example of the error generation direction part of FIG. 4.
FIG. 14 is a time chart depicting an operation example of the error generation direction part of FIG. 4.
FIG. 15 is a circuit diagram depicting a first variant example of a timer circuit of FIG. 13.
FIG. 16 is a circuit diagram depicting a second variant example of a timer circuit of FIG. 13.
FIG. 17 is a block diagram depicting an information processing apparatus according to an embodiment.

### MODE OF CARRYING OUT THE INVENTION

According to an embodiment, a waiting circuit (referred to as a timer circuit, hereinafter) is provided which operates asynchronously from operations of a CPU (Central Processing Unit), when a pseudo trouble (referred to as an "error" hereinafter) is to be generated in an instruction execution part that processes an instruction from the CPU as a processor. "Error" means an error with which the instruction execution part cannot properly execute an instruction (the same also hereinafter). By generating an error in the instruction execution part, operations of a system in response to the error are tested for in a computer that includes the instruction execution part and the CPU.

When the instruction execution part is caused to generate an error, the instruction execution part determines whether or not an error of a required condition can be generated, in other words, whether or not a predetermined condition is met. When the predetermined condition is met, the instruction execution part generates an error. However, when the predetermined condition is not met, the instruction execution part carries out the following operations. That is, the instruction execution part uses the waiting circuit, and again determines whether or not the predetermined condition is met after waiting for a certain time from determining whether or not the predetermined condition is met. In a case where the predetermined condition is still not met as a result of the determination, the instruction execution part repeats the operation of further determining whether or not the predetermined condition is met again after waiting for a certain time, until the predetermined condition becomes met.

As a method of the instruction execution part generating an error, a method (first method) of an error being generated asynchronously from operations of the CPU in response to a direction of an operator is considered. Further, a method (second method) of the instruction execution part being made to generate an error synchronously with an operation of the CPU at a time of a predetermined condition becoming met is considered.

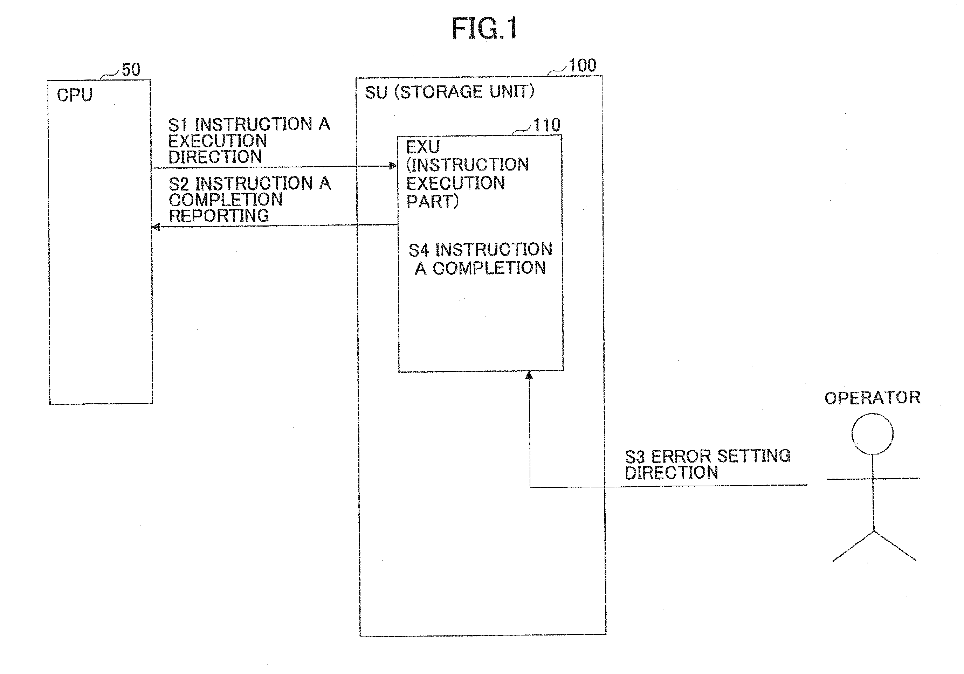

The first method will now be described using FIGs. 1 through 3. FIG. 1 depicts a configuration of a computer as an information processing apparatus that includes a CPU 50 and a storage unit 100. The CPU 50 provides a direction to the storage unit 100 to execute an instruction A (S1). An instruction execution part (depicted as "EXU") 110 of the storage unit 100 executes the instruction A, and completes the execution of the instruction A (S4). It is assumed that the instruction A is an instruction to read/write data. Further, it is assumed that a time required by the instruction execution part 110 to store received data to a buffer is shorter than a time required to write the data in a large capacity storage, and the instruction execution part 110 temporarily stores the data received from the CPU 50 in the buffer and writes the data in the large capacity storage via the buffer.

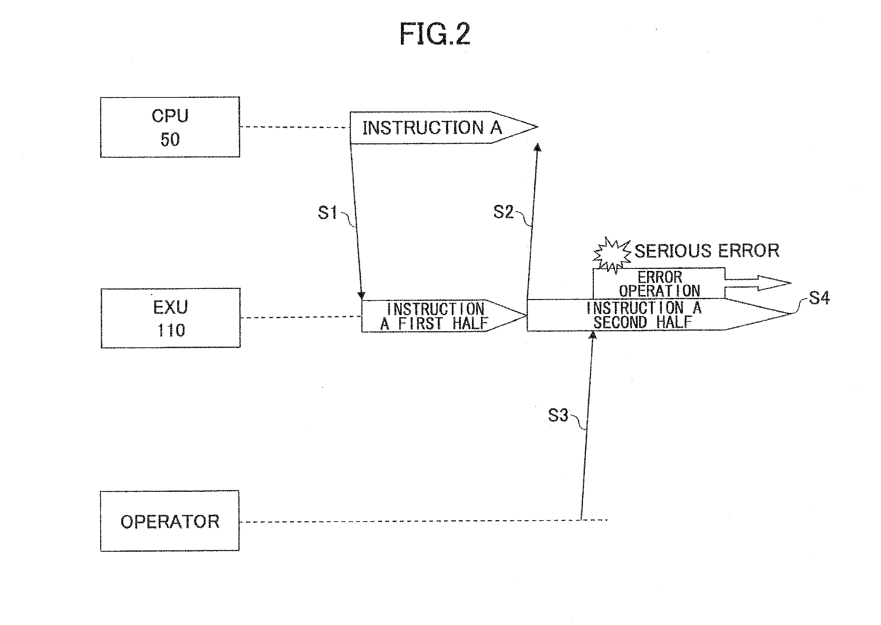

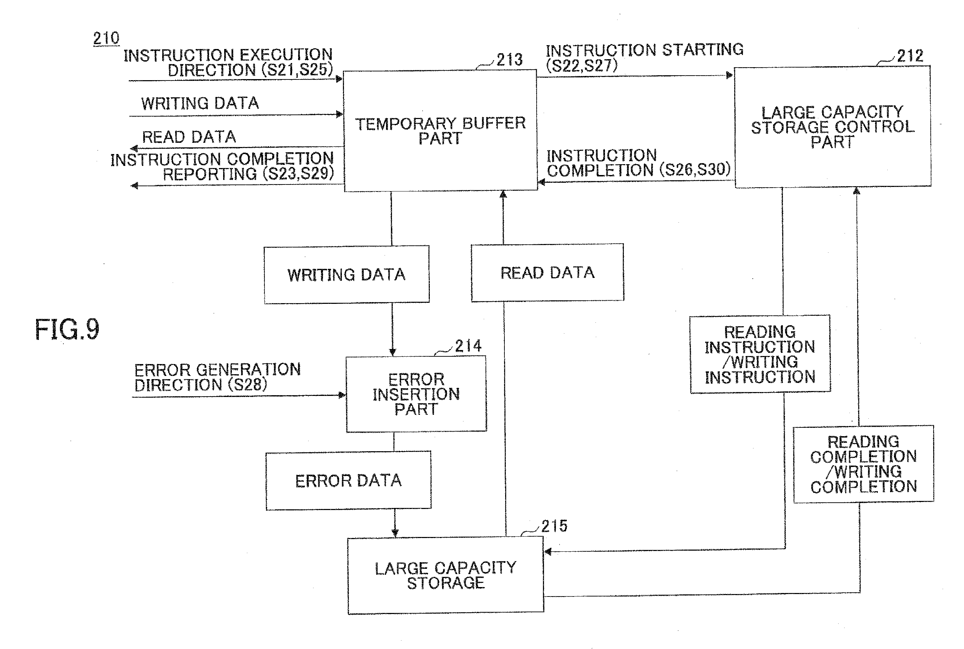

In such a case, as depicted in FIG. 2, the instruction execution part 110 carries out so-called "detachment control", i.e., carries out completion reporting to the CPU indicating that execution of the instruction A has been completed (S2), after a direction to execute the instruction A is given by the CPU 50 (S1), before the instruction A has not been completed yet. That is, the instruction execution part 110 carries out completion reporting for the instruction A at a point of time at which the instruction execution part 110 receives all of the data to be written concerning the instruction A from the CPU 50 and stores it in the buffer. When having received the data from the CPU 50, the instruction execution part 110 stores the received data in the buffer, and also starts operations of writing the data in the large capacity storage. Then, even after having carried out the completion reporting to the CPU 50 (S2), the instruction execution part 110 continues the operations of writing the data in the large capacity storage via the buffer (described later with FIGs. 9 through 11).

Operations from a point of time of the instruction execution part 110 having started execution of the instruction A (S1) until carrying out the completion reporting for the instruction A to the CPU (S2) will be referred to as a first half of an execution process of the instruction. Further, operations from a pint of time of the instruction execution part 110 having carried out the completion reporting for the instruction A (S2) until completing operations of writing the data to the large capacity storage (S4) will be referred to as a second half of the execution process of the instruction. As mentioned above, in this example, a time required in the instruction execution part 110 to store the data in the buffer is shorter than a time required to write the data in the large capacity storage. Therefore, thanks to the detachment control, the CPU 50 can receive the completion reporting for the instruction A from the instruction execution part and finish execution of the instruction A at an earlier stage, and start execution of a next instruction B. Thus, it is possible to increase the operation speed of the CPU 50.

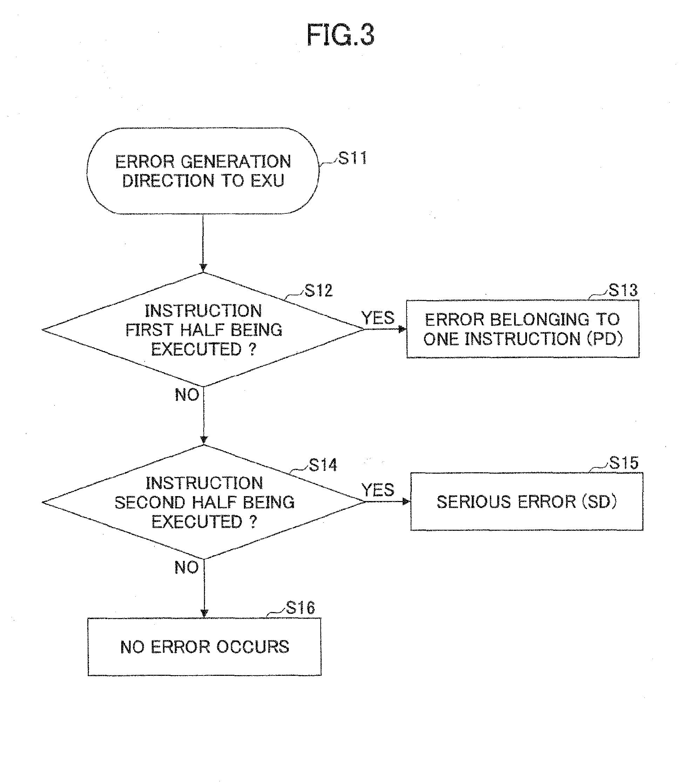

As depicted in FIG. 2, it is assumed that an operator provides an error generation direction during the second half of the execution process of the instruction A. In this case, an error occurs in the second half of the execution process of the instruction A in the instruction execution part 110 and reporting of the error is carried out to the CPU 50. However, in the second half of the execution process of the instruction A, as mentioned above, the CPU 50 has already received the completion reporting for the instruction A and has finished execution of the instruction A. Therefore, the CPU 50 cannot understand the error reporting from the instruction execution part as reporting of an error concerning the instruction A, and cannot treat it as an error belonging to one instruction (PD: Processing Damage). As a result, the CPU 50 treats the error as an error of the system of the computer (SD: System Damage). As to this point, a description will be made with FIG. 3.

In FIG. 3, an error generation direction is provided to the instruction execution part 110 (step S11). In a case where the error generation direction has been given during execution of the instruction first half (step S12 YES), an error that can be treated as belonging to the instruction that the instruction execution part 110 is executing occurs in the instruction execution part 110 (step S13). On the other hand, in a case where the error generation direction has been given during execution of the instruction second half (step S12 NO, step S14 YES), the CPU 50 cannot treat an error reported by the instruction execution part 110 as one belonging to the one instruction that the CPU is executing, and an error occurs which is treated as a serious error concerning the entirety of the system (step S13). Further, in a case where the error generation direction has been given in neither the first half nor the second half of the execution process of the instruction (step S12 NO, step S14 NO), no error occurs in the instruction execution part 110 since there is no target for which an error occurs (step S16).

Thus, according to the first method, a type of an error occurring differs depending on a timing of an error generation direction (step S11) by an operator. That is, depending on a timing of an error generation direction, a relatively slight error that is treated as belonging to one instruction, or a relatively serious error that is treated as concerning the entirety of the system occurs. Further, it is considered that it is difficult for an operator to positively provide an error generation direction at a timing of the first half or the second half of the execution process of an instruction. Therefore, a case is assumed where although an operator provides an error generation direction for the purpose of generating an error that is to be treated as belonging to one instruction, actually an error that is treated as concerning the entirety of the system occurs. When an error occurs which is treated as concerning the entirety of the system, a case is assumed where, depending on circumstances, resetting of the computer, rebooting the OS (Operating System) or the like are required, relatively a long time is required, and the work efficiency is degraded.

Next, the second method will be described. According to the second method, the instruction execution part is caused to generate an error in synchronization with an operation of a CPU on condition that a predetermined condition is met. In this case, an error is generated at a timing of the predetermined condition having been met. However, it is not possible to generate an error after the timing of the predetermined condition having been met. For example, a case will be assumed where although no particular problem occurs when an error is generated at the timing of the predetermined condition having been met, a problem occurs when an error is generated after the elapse of a predetermined time, for example, two clock cycles, from the timing of the predetermined condition having been met. In such a case, it is not possible to find the problem which may occur, by generating of an error at the timing of the predetermined condition having been met.

According to the embodiment of the invention, it is also possible to cause the instruction execution part to generate an error when it has been determined in the instruction execution part that a predetermined condition has been met, and also at a timing after a certain time has further elapsed from the point of time of the predetermined condition having been met. As a result, it is possible to positively generate an error which will be treated as belonging to one instruction, and also, it is possible to generate an error asynchronously from operations of the CPU at various timings in a state of a predetermined condition having been met. As a result, it is possible to efficiently and effectively test for operations of the system at a time of an error being generated.

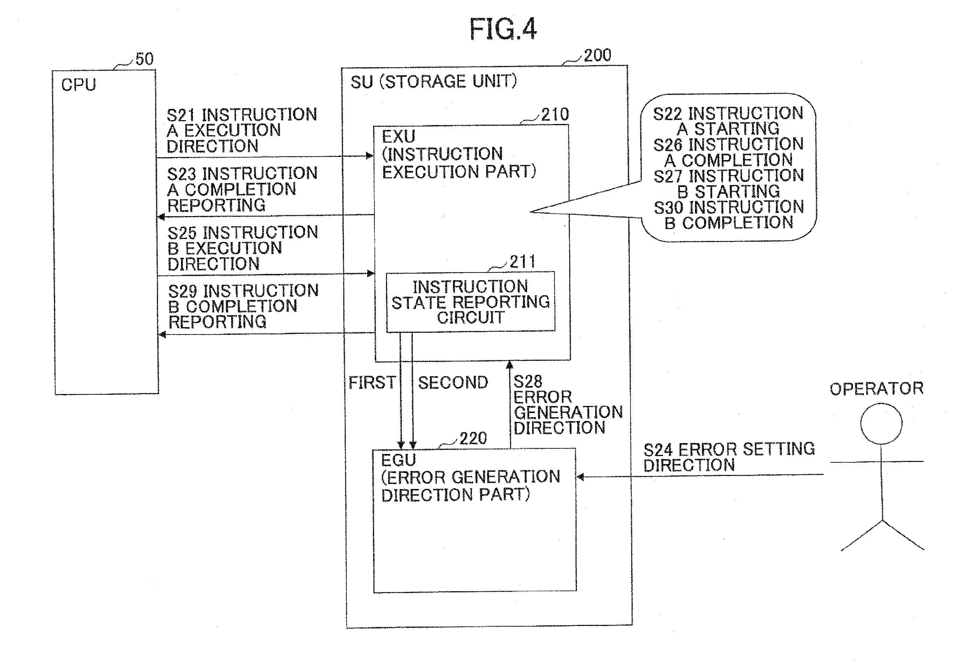

FIG. 4 is a block diagram of a computer as an information processing apparatus according to the embodiment including a CPU 50 as a processor and a storage unit (SU) 200. As depicted in FIG. 4, the storage unit 200 includes an instruction execution part (EXU: EXecution Unit) 210 and an error generation direction part (EXU: Error Generation Unit) 220 as an error generation direction circuit. The instruction execution part 210 has an instruction state reporting part 211 that reports a state of execution of an instruction to the error generation direction part 220. The instruction execution part 210 receives an execution direction for an instruction from the CPU 50, executes the instruction, and carries out completion reporting for the executed instruction to the CPU 50. The error generation direction part 220 receives an error setting direction from an operator, and provides an error generation direction to the instruction execution part 210. In response to receiving the error generation direction from the error generation direction part 220, the instruction execution part 210 generates an error as directed, and reports to the CPU 50 the generation of the error. In response to receiving the reporting of the generation of the error, the CPU 50 treats the error as an error belonging to one instruction or as an error of the entirety of the system, depending on the timing of the error generation reporting.

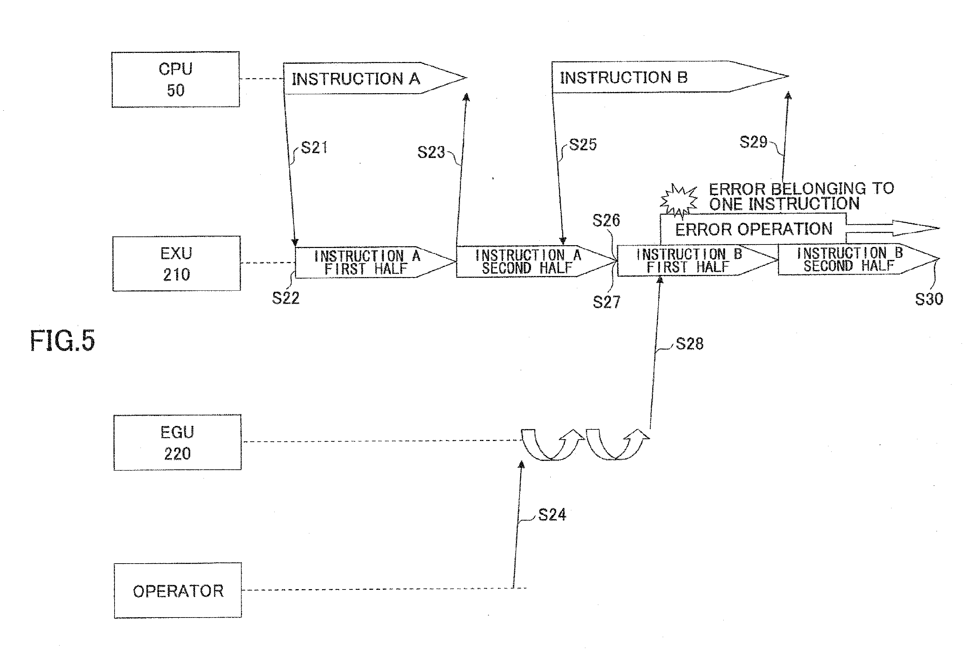

With FIG. 5, an operation example of the storage unit 200 depicted in FIG. 4 will be described. An execution direction for an instruction A is provided to the storage unit 200 from the CPU 50 (step S21). The instruction execution part 210 of the storage unit 200 receives the execution direction for the instruction A, and starts execution of the instruction A (step S22). It is assumed that the instruction A is a data writing instruction for the storage unit 200. When having finished the first half of the execution process of the instruction A, the instruction execution part 210 carries out completion reporting for the instruction A to the CPU 50 (sep S23). The CPU 50 receives the completion reporting from the instruction execution part, and provides an execution direction for an instruction B to the instruction execution part 210 (step S25). It is assumed that the instruction B, the same as the instruction A, is also a data writing direction for the storage unit 200. On the other hand, the instruction execution part 210 executes the second half of the execution process of the instruction A continuously after the completion reporting (step S23) for the instruction A to the CPU 50.

After having completed the instruction A (step S26), the instruction execution part 210 starts execution of the first half of the execution process of the instruction B (step S27). After having completed the first half of the execution process of the instruction B, the instruction execution part 210 carries out completion reporting for the instruction B to the CPU 50 (step S29). After the completion reporting (step S29) for the instruction B, the instruction execution part continuously executes the second half of the execution process of the instruction B and finishes the process of the instruction B (step S30).

It will be assumed that, for the purpose of generating an error to be treated as belonging to one instruction, an operator has input an error setting direction to the instruction setting direction part 220 of the storage unit 200 (step S24). In the example of FIG. 5, the timing of the error setting direction (step S24) is a timing of the instruction execution part 210 being executing the second half of the execution process of the instruction A. As mentioned above, at this timing, the instruction execution part 210 has already carried out the completion reporting for the instruction B to the CPU 50 (step S23). Therefore, even if the error generation direction part 220 provided an error generation direction to the instruction execution part 210 at this timing of S24, the error would be generated as a serious error to be treated as an error concerning the entirety of the system, and this would be undesirable. The embodiment has a function of avoiding such a situation.

As depicted in FIG. 4, the error generation direction part 220 receives a FIRST signal and a SECOND signal from the instruction state reporting circuit 211 of the instruction execution part 210. Then, based on these FIRST and SECOND signals, the error generation direction part 220 determines whether or not the instruction execution part 210 meets a predetermined condition. The FIRST signal indicates that the instruction execution part 210 is executing the first half of the execution process of an instruction, and the SECOND signal indicates that the instruction execution part 210 is executing the second half of the execution process of an instruction.

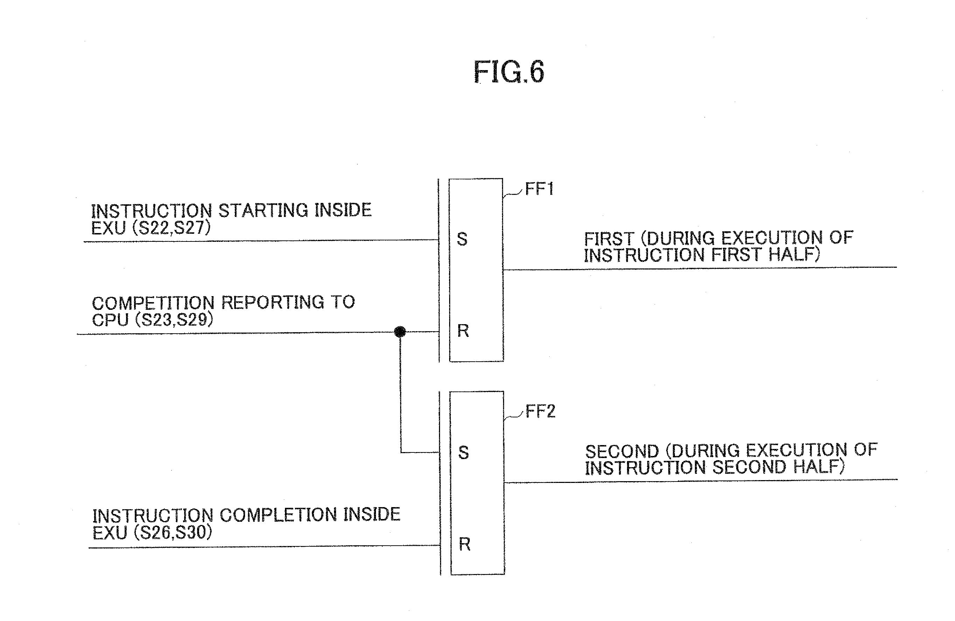

FIG. 6 depicts a circuit example of the instruction state reporting circuit 211. The instruction state reporting circuit 211 of FIG. 6 has RS (Reset Set) flip-flop circuits FF1 and FF2 (hereinafter, simply referred to as flip-flop circuits FF1 and FF2, respectively). The flip-flop circuit FF1 outputs the FIRST signal, and the flip-flop circuit FF2 outputs the SECOND signal. To a set terminal S of the flip-flop circuit FF1, a signal is input which is asserted when the instruction execution part 210 has started execution of an instruction, i.e., at a timing of step S22 or S27. To assert a signal means to cause a signal to have a H (high) level. To negate a signal means to cause a signal to have a L (low) level. Further, a H level indicates "1" and a L level indicates "0". To a reset terminal R of the flip-flop circuit FF1, a signal is input which is asserted when the instruction execution part 210 has carried out completion reporting to the CPU 50, i.e., at a timing of step S23 or S29. Similarly, to a set terminal S of the flip-flop circuit FF2, a signal is input which is asserted when the instruction execution part 210 has carried out completion reporting to the CPU 50. To a reset terminal R of the flip-flop circuit FF2, a signal is input which is asserted when the instruction execution part 210 has finished execution of an instruction, i.e., a timing of step S26 or S30.

Below, operations of the instruction state reporting circuit 211 of FIG. 6 will be described. At first, the flip-flop circuit FF1 has been reset at a point of time of the instruction execution part 210 having carried out completion reporting for an instruction that has been most recently executed by the instruction execution part 210, and the FIRST signal has been negated. After that, the flip-flop circuit FF1 is set in response to the instruction execution part having started instruction execution (S22, S27), and asserts the FIRST signal. Next, when the instruction execution part 210 carries out completion reporting for an instruction the instruction execution part 210 is executing (step S23, S29), the flip-flop circuit FF1 negates the FIRST signal. Therefore, the FIRST signal has been asserted during the instruction execution part 210 being executing the first half of the execution process of an instruction, has been negated during the instruction execution part 210 being executing the second half of the execution process of the instruction, and has been also negated during the instruction execution part 210 being executing no instruction.

On the other hand, the flip-flop circuit FF2 has been reset at a point of time of the instruction execution part 210 having completed the instruction that has been most recently executed by the instruction execution part 210, and the SECOND signal has been negated. After that, when the instruction execution part 210 carries out completion reporting (step S23, S29), the flip-flop circuit FF2 is set and asserts the SECOND signal. Therefore, the SECOND signal has been negated during the instruction execution part 210 being executing the first half of the execution process of an instruction, has been asserted during the instruction execution part 210 being executing the second half of the execution process of the instruction, and has been negated during the instruction execution part 210 being executing no instruction.

Therefore, by detecting that the FIRST signal has been asserted ("1") and the SECOND signal has been negated ("0"), the error generation direction part 220 can detect that the instruction execution part 210 is executing the first half of the execution process of an instruction. That is, in a case where the FIRST signal is "1" and the SECOND signal is "0", this indicates that the instruction execution part 210 is executing the first half of the execution process of an instruction, and in the other cases, these indicate that the instruction execution part 210 is not executing the first half of the execution process of an instruction.

On the other hand, by detecting that the FIRST signal has been negated ("0") and the SECOND signal has been asserted ("1"), the error generation direction part 220 can detect that the instruction execution part 210 is executing the second half of the execution process of an instruction. That is, in a case where the FIRST signal is "0" and the SECOND signal is "1", this indicates that the instruction execution part 210 is executing the second half of the execution process of an instruction, and in the other cases, these indicate that the instruction execution part 210 is not executing the second half of the execution process of an instruction.

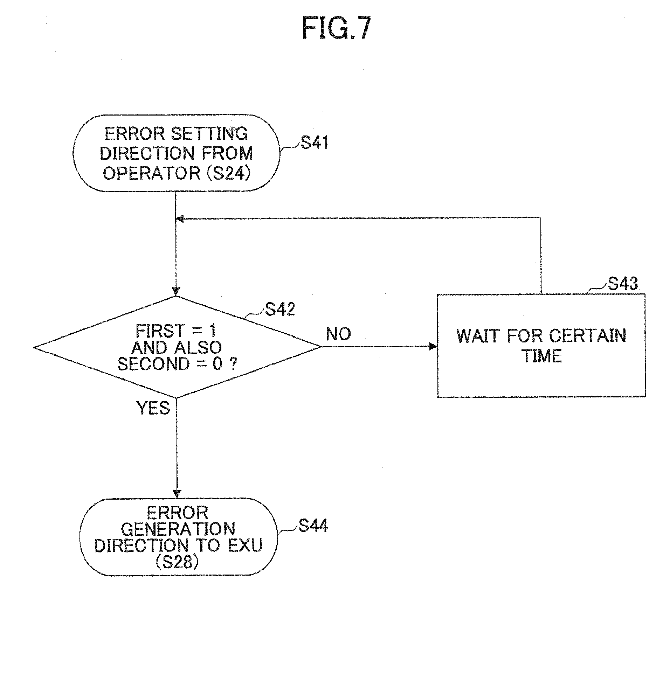

FIG. 7 is a flowchart depicting one example of a flow of operations of the error generation direction part 220 depicted in FIG. 4. When an error setting direction is input by an operator in step S41, the process proceeds to step S42. In step S42, the error generation direction part 220 determines whether or not the FIRST signal is "1" and the SECOND signal is "0" which are from the instruction state reporting circuit 211 of the instruction execution part 210. In a case where the FIRST signal is "1" and the SECOND signal is "0" (S42 YES), that is, the instruction execution part 210 is executing an instruction first half and meets a condition for error generation, the error generation direction part 220 outputs an error generation direction to the instruction execution part 210 (step S44). When having received the error generation direction from the error generation direction part 220 (see FIG. 5), the instruction execution part 210 generates an error concerning the instruction B that is being currently executed, and after that, carries out operations according to the generated error. Then, the instruction execution part 210 reports the generated error to the CPU 50 as a report for the instruction B.

On the other hand, in a case where the FIRST signal is not "1" and the SECOND signal is not "0" (step S42 NO), that is, when the instruction execution part 210 is not executing the first half of the execution process of an instruction and does not meet the condition for error generation, the error generation direction part proceeds to step S43. In step S43, the error generation direction part 220 waits for a certain time. When the waiting period time has expired, the error generation direction part 220 again proceeds to step S42, and repeats a determination as to whether or not the instruction execution part 210 is executing the first half of the execution process of an instruction, until being able to determine that the instruction execution part 210 is executing the first half of the execution process of an instruction.

Thus, in a case where an operator has input an error setting direction for the purpose of generating an error that can be treated as belonging to one instruction, the error generation direction part 220 carries out the following operations. That is, when the instruction execution part 210 is executing the first half of the execution process of an instruction at the point of time of the error setting direction being input, the error generation direction part 220 outputs an error generation direction to the instruction execution part 210 at the point of time. On the other hand, when the instruction execution part 210 is not executing the first half of the execution process of an instruction at the point of time of the error setting direction being input, until being able to determine that the instruction execution part 210 is executing the first half of the execution process of an instruction, the error generation direction part 220 waits for a certain time, and repeats the determination after an elapse of the certain time. That is, each time the waiting period of time for the certain time has expired, the error generation direction part 220 determines whether or not the instruction execution part 210 is executing the first half of the execution process of an instruction, and outputs an error generation direction to the instruction execution part 210 when the instruction execution part 210 is executing the first half of the execution process of an instruction.

Therefore, in a case where an operator has input an error setting direction for the purpose of generating an error that can be treated as belonging to one instruction, the error generation direction part 220 outputs an error generation direction to the instruction execution part 210 only in a case of being able to determine that the instruction execution part 210 is executing the first half of the execution process of an instruction. Therefore, the error generation direction part 220 can always cause the instruction execution part 210 to generate an error that can be treated as belonging to one instruction without regard to a timing of an operator inputting an error setting direction to the error generation direction part 220.

Further, as mentioned above, when an error setting direction is input from an operator during the instruction execution part 210 being executing the first half of the execution process of an instruction, the error generation direction part 220 outputs an error generation direction to the instruction execution part 210 at this point of time. On the other hand, in the other cases, the error generation direction part 220 carries out a determination for an error generation condition (step S42) each time a waiting period of time of a certain time expires, and outputs an error generation direction to the instruction execution part 210 when the error generation condition is met (S42 YES). Therefore, the error generation direction part 220 does not necessarily output an error generation direction at a timing of the instruction execution part 210 having started the first half of the execution process of an instruction. That is, consequently, the error generation direction part 220 outputs an error generation direction at various timings in a process of the instruction execution part 210 executing the instruction first half depending on a timing of an operator inputting an error setting direction. The error generation direction part 220 can provide an error generation direction to the instruction execution part 210 asynchronously from operations of the CPU 50. Therefore, it is possible to test for operations of the system of the computer at a time of an error occurring in the instruction execution part 210 under various conditions. That is, there is a likelihood of being able to find a problem even in a case where the problem occurs only when an error is generated at a timing different from a timing of the error generation condition having come to be met.

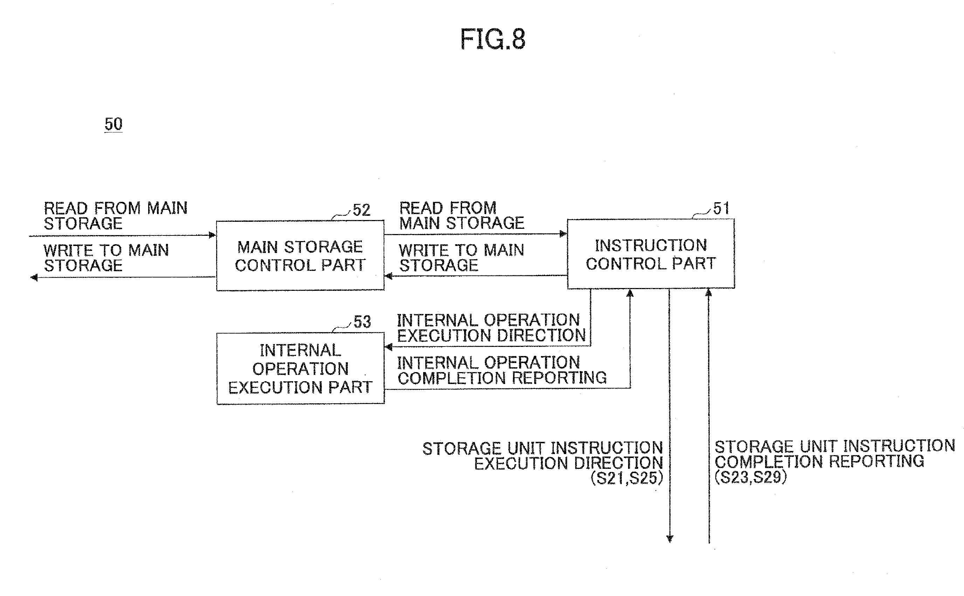

It is noted that in a case where an operator inputs an error setting direction for the purpose of generating an error that is treated as a serious error concerning the entirety of the system, the error generation direction part 220 operates to determine whether the FIRST signal is "0" and the SECOND signal is "1", i.e., whether this error generation condition is met. The other operations are the same as those in FIG. 7 described above. FIG. 8 is a block diagram depicting a configuration example of the CPU 50 depicted in FIG. 4. As depicted in FIG. 8, the CPU 50 has an instruction control part 51, a main storage control part 52 and an internal operation execution part 53. The instruction control part 51 reads an instruction from a main storage (memory, omitted in FIG. 8) and starts execution of the instruction. Instructions include various instructions of reading/writing of a register inside the instruction control part 51, reading/writing of the main storage, execution of internal operations, and reading/writing of the storage unit 200. In a case of reading/writing of the storage unit 200, as described with FIG. 4, the instruction control part 51 of the CPU 50 provides an execution direction for the instruction to the storage unit 200 (step S21, S25), and receives completion reporting for the instruction (step S23, S29) .

For example, in a case of an instruction to store data read by the CPU 50 from the main storage in the storage unit 200, the CPU 50 transmits data read from the main storage to the storage unit 200. Then, after completing transmission of all the data to the storage unit 200, the CPU 50 completes execution of the instruction by receiving completion reporting for the instruction execution from the storage unit 200, and starts execution of a next instruction. Thus, it is possible for the CPU 50 to execute a next instruction at an early stage as a result of the storage unit 200 carrying out completion reporting to the CPU at a point of time of having received all the data from the CPU 50, and thus, it is possible to increase the speed of operation of the system of the computer.

Further, the instruction control part 51 provides an internal operation execution direction to the internal operation execution part 53, and receives corresponding internal operation completion reporting from the internal operation execution part 53.

FIG. 9 is a block diagram depicting a configuration of the instruction execution part 210 depicted in FIG. 4. As depicted in FIG. 9, the instruction execution part 210 has a large capacity storage control part 212, a temporary buffer part 213, an error insertion part 214 and a large capacity storage 215. Further, although being omitted in FIG. 9, as mentioned above, the instruction execution part 210 includes the instruction state reporting part 211 (see FIG. 4).

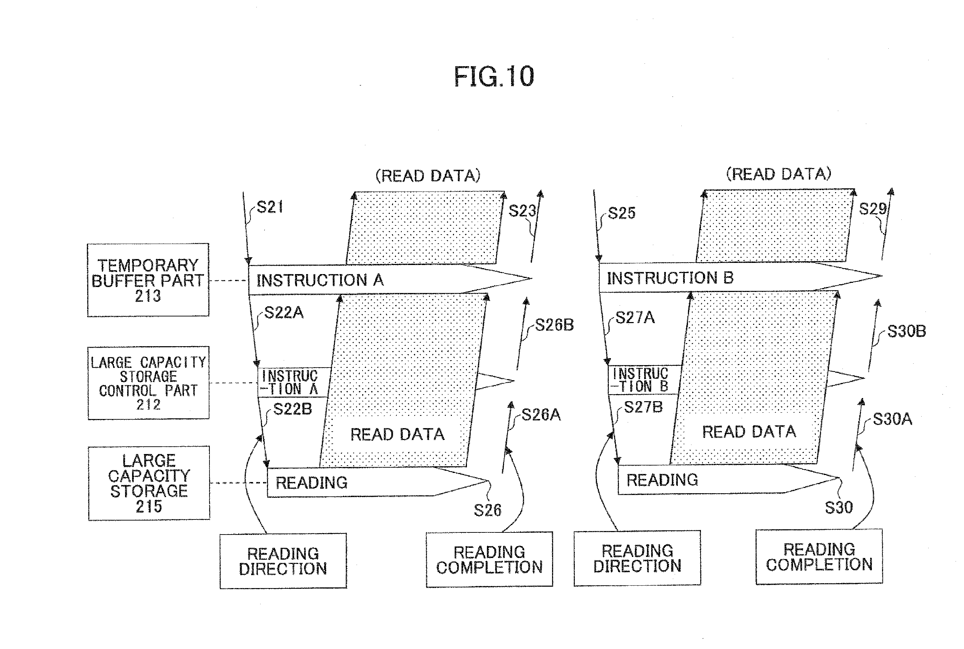

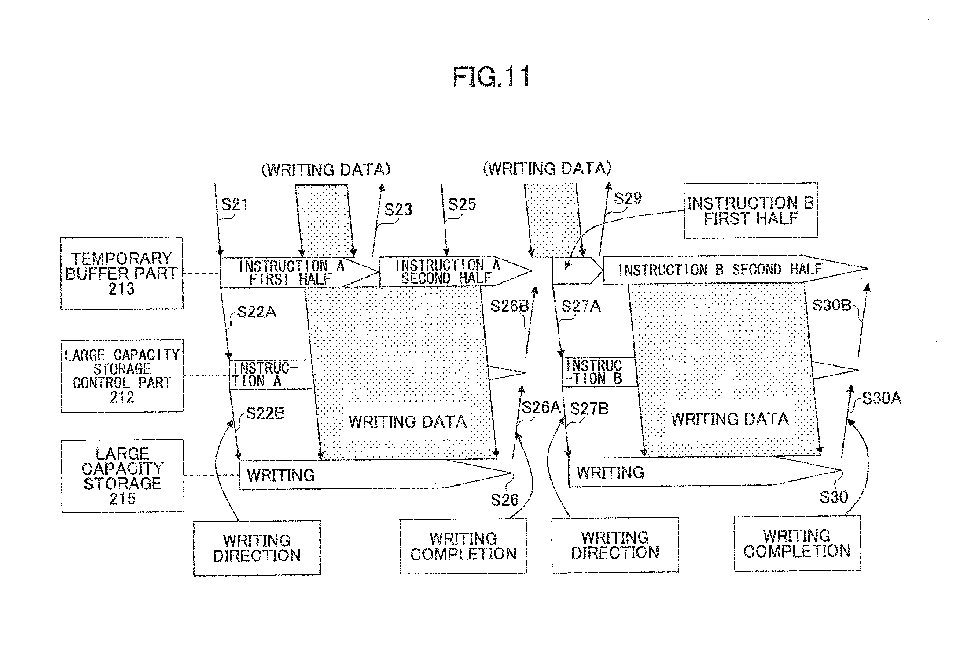

FIGs. 10 and 11 are time charts for illustrating operations of the instruction execution part 210 depicted in FIG. 9. Below, with FIGs. 9, 10 and 11, basic operations and specific operation examples of the respective elements of the instruction execution part 210 will be described. An instruction from the CPU 50 is stored in the temporary buffer part 213 temporarily. In a case where the large capacity storage control part 212 is in a state of being able to be used, the temporary buffer part 213 provides a direction to the large capacity storage control part 213 to start instruction execution (step S22A, S27A). The instruction includes information reading from the large capacity storage 215 and information writing to the large capacity storage 215.

FIG. 10 depicts an operation example for a case where an instruction A and an instruction B from the CPU 50 are information reading instructions from the large capacity storage 215. In this case, the temporary buffer part 213 receives an execution direction for the instruction A from the CPU 50 (step S21), and the large capacity storage control part 212 sends a direction for reading to the large capacity storage 215 (step S22B). The large capacity storage 215 responds to the direction for reading from the large capacity storage control part, reads data, and sends the read data to the temporary buffer part 213. When the large capacity storage 215 has completed the reading of data (step S26), the large capacity storage 215 sends a reading completion report to the large capacity storage control part 212 (step S26A). The large capacity storage control part 212 receives the reading completion report, and carries out completion reporting to the temporary buffer part 213 (step 26B). The temporary buffer part 213 receives the completion reporting from the large capacity storage control part 212, and carries out completion reporting to the CPU 50 (step S23).

The CPU 50 receives the completion reporting from the temporary buffer part 213, and sends an execution direction for the next instruction B to the instruction execution part 210. The temporary buffer part 213 receives the execution direction for the next instruction B from the CPU 50 (step S25), and the large capacity storage control part 212 sends a direction for reading to the large capacity storage 215 (step S27B). The large capacity storage 215 responds to the direction for reading from the large capacity storage control part 212, reads data, and sends the read data to the temporary buffer part 213. When the large capacity storage 215 has completed the reading of data (step S30), the large capacity storage 215 sends a reading completion report to the large capacity storage control part 212 (step S30A). The large capacity storage control part 212 receives the reading completion report from the large capacity storage 215, and carries out completion reporting to the temporary buffer part 213 (step 30B). The temporary buffer part 213 receives the completion reporting from the large capacity storage control part, and carries out completion reporting to the CPU 50 (step S29).

Thus, in a case where an instruction from the CPU 50 is a reading instruction from the large capacity storage 215, the completion reporting is carried out to the CPU 50 (step S23, S29) at the point of time of the instruction execution part 210 having completed execution of the instruction (step S26, S30). That is, in this case, in the execution process of the instruction, the point of time (step S23, S29) of the instruction execution part 210 carrying out the completion reporting to the CPU 50 (step S23, S29) coincides with the point of time of the instruction execution part 210 actually completing execution of the instruction (step S26, S30).

FIG. 11 depicts an operation example for a case where an instruction A and an instruction B from the CPU 50 are writing instructions for the large capacity storage 215. It is noted that in this case, it is assumed that in comparison to a time required by the temporary buffer part 213 to complete reception of writing data from the CPU 50, a time required to write the writing data to the large capacity storage 215 is longer.

The temporary buffer part 213 receives an execution direction for the instruction A from the CPU 50 (step S21), and provides a writing direction to the large capacity storage control part 212 (step S22A). The large capacity storage control part 212 receives the writing direction and sends a writing direction to the large capacity storage 215 (step S22B). The large capacity storage 215 responds to the writing direction from the large capacity storage control part 212, and writes writing data that is received from the CPU 50 via the temporary buffer part 213 and the error insertion part 214. Further, in this case, the temporary buffer part 213 carries out completion reporting to the CPU 50 (step S23) at a point of time of having completed reception of the writing data concerning the instruction A from the CPU 50. The CPU 50 receives the completion reporting from the temporary buffer part 213, and provides an execution direction for the instruction B (step S25). The temporary buffer part 213 receives the execution direction for the instruction B. However, in this case, the temporary buffer part 213 has not received completion reporting for the instruction A from the large capacity storage control part 212 yet. Therefore, the temporary buffer part does not provide an execution direction for the instruction B to the large capacity storage control part 212.

The large capacity storage 215 continues the writing of the writing data even after the temporary buffer part 213 carries out the completion reporting to the CPU 50 (step S23). When the large capacity storage 215 has completed the writing (step S26), the large capacity storage 215 carries out writing completion reporting to the large capacity storage control part 212 (step S26A). The large capacity storage control part 212 receives the writing completion reporting from the large capacity storage, and carries out completion reporting to the temporary buffer part 213 (step S26B). The temporary buffer part 213 receives the completion reporting from the large capacity storage control part 212, and provides an execution direction for the instruction B to the large capacity storage control part 212 (step S27A).

The large capacity storage control part 212 receives the execution direction for the instruction B and provides a writing direction to the large capacity storage 215 (step S27B). The large capacity storage 215 responds to the writing direction from the large capacity storage control part 212, and writes writing data that is received from the CPU 50 via the temporary buffer part 213 and the error insertion part 214. The same as the above-mentioned, the temporary buffer part 213 carries out completion reporting to the CPU 50 (step S29) at a point of time of having completed reception of the writing data concerning the instruction B from the CPU 50. When the large capacity storage 215 completes the writing of the writing data (step S30), the large capacity storage 215 carries out writing completion reporting to the large capacity storage control part 212 (step S30A). The large capacity storage control part 212 receives the writing completion reporting from the large capacity storage 215, and carries out completion reporting to the temporary buffer part 213 (step S30B).

In the case of FIG. 11, thus, completion reporting is carried out to the CPU 50 from the primary buffer part at the point of time of completion of reception of the writing data by the temporary buffer part 213 which finishes in a relatively short time. Thereby, the CPU 50 can complete an instruction at an early stage. That is, in FIG. 11, in a case where the large capacity storage 215 carried out completion reporting to the CPU 50 at the point of time of the large capacity storage 215 having completed the writing, the CPU 50 could not complete the instruction until receiving the completion reporting from the primary buffer part, and could not start the next instruction. In contrast thereto, as a result of the completion reporting being carried out to the CPU 50 at the point of time of the temporary buffer part 213 having completed the reception of the writing data as mentioned above, the CPU 50 can complete the instruction at an earlier stage, and can start execution of the next instruction. As a result, it is possible to increase the speed of operation of the system of the computer.

Next, operations of the error insertion part 214 depicted in FIG. 9 will be described. The error insertion part 214 converts writing data into error data by destroying the writing data that is sent from the temporary buffer part 213 to the large capacity storage 215, when receiving an error generation direction from the error generation direction part 220 (step S28). For example, it is assumed that an ECC (Error Correction Code) having a function of correcting a 1-bit error and detecting a 2-bit error is set in writing data, and the large capacity storage 215 has a function of using the ECC and detecting an error of the writing data and correcting it. In such a case, an exclusive OR circuit that converts writing data into error data by inverting 2 bits included in the writing data, for example, may be provided in the error insertion part 214. In this case, when writing data in which 2 bits have been inverted by the error insertion circuit 214 is sent to the large capacity storage 215, the large capacity storage 215 detects an error by using ECC. In this case, it is possible to detect the 2-bit error but it is not possible to correct it. Then, the large capacity storage 215 reports that it has detected an error to the large capacity storage control part 212. The large capacity storage control part 212 reports to the CPU via the temporary buffer part 213 that it has detected an error as a report concerning a writing instruction. The system of the computer receives the report of having detected an error from the large capacity storage control part 212, and carries out predetermined operations. That is, in a case where the error can be treated as an error concerning one instruction, the system of the computer records the information of having detected an error in an internal register, and further, displays the information of having detected an error to an operator. By testing for these operations of the system of the computer, the operator can prove that the system of the computer normally carries out operations of a time of an error occurring.

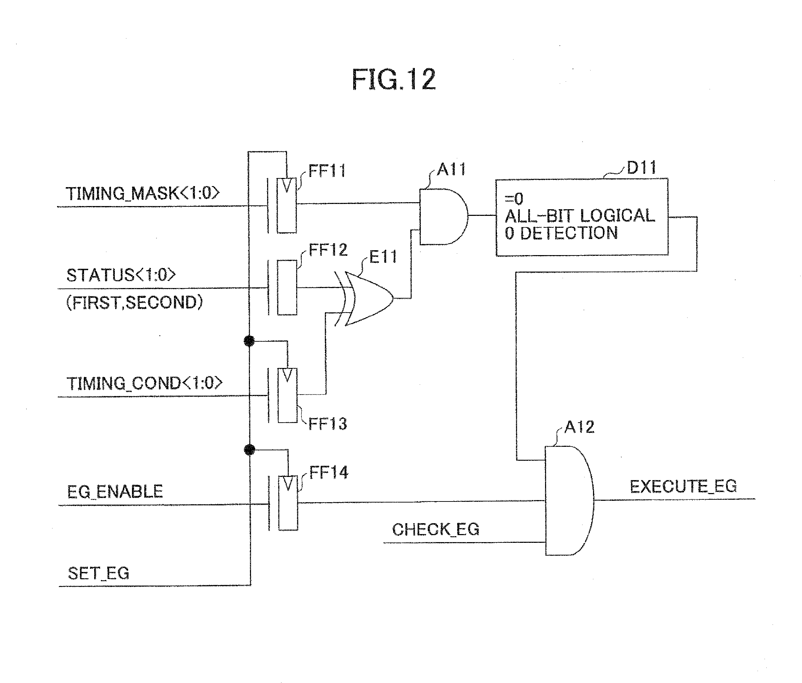

FIG. 12 depicts a circuit configuration example of the error generation direction part 220 depicted in FIG. 4. In a case of the circuit configuration example depicted in FIG. 12, the error generation direction part 220 has a D (Delay)-flip-flop circuit FF11 of 2 bits (hereinafter, simply referred to as a flip-flop circuit F11) and a D-flip-flop circuit FF12 of 2 bits (hereinafter, simply referred to as a flip-flop circuit F12). The error generation direction part 220 further has a D-flip-flop circuit FF13 of 2 bits (hereinafter, simply referred to as a flip-flop circuit F13) and a D-flip-flop circuit FF14 of 1 bit (hereinafter, simply referred to as a flip-flop circuit F14). To the flip-flop circuit F11, a TIMING_MASK<1:0> (2 bits) signal for designating whether both signals of the FIRST signal and the SECOND signal are to be checked or only any one signal thereof is to be checked is input. In a case where both signals are to be checked, a signal of (1, 1) is input to the flip-flop circuit F11. In a case where only any one signal is to be checked, a signal of (1, 0) or (0, 1) is input to the flip-flop circuit FF11.

To the flip-flop circuit FF12, the FIRST signal and the SECOND signal are input as a STATUS<1:0> signal of 2 bits. In a case where both the signals are "1", a signal (1, 1) is input to the flip-flop circuit F12. In a case where one thereof is "1", a signal of (1, 0) or (0, 1) is input to the flip-flop circuit F12.

To the flip-flop circuit F13, a TIMING_COND<1:0> signal of 2 bits that designates values of the FIRST signal and the SECOND signal with which an error generation direction is provided (error generation condition). In a case where an error generation direction is provided in a case where the FIRST signal and the SECOND signal are (1, 0), respectively, i.e., during execution of the first half of the execution process of an instruction as depicted in step S42 of FIG. 7, a signal of (1, 0) is input to the flip-flop circuit FF13.

To the flip-flop circuit FF14, a signal EG_ENABLE that allows error generation is input. In a case where error generation is allowed, a signal of "1" is input.

Further, to clock terminals of the respective flip-flop circuits FF11, FF13 and FF14, a SET_EG signal indicating an error setting direction (S24) of FIG. 4 is input. In a case where an operator has provided an error setting direction (S24), a signal of "1" is input to the clock terminals of the respective flip-flop circuits FF11, FF13 and FF14. Therefore, the respective flip-flop circuits FF11, FF13 and FF14 take in the values of input signals when the SET_EG signal has become "1", and thereafter, hold and output the values that have been taken in.

The error generation direction part 220 further has an exclusive OR circuit E11 as an error generation condition determination part to which outputs of the flip-flop circuits FF12 and FF13 are input. The exclusive OR circuit E11 outputs "0" in a case where the respective 2-bit output values of the flip-flop circuits FF12 and FF13 coincide between both the flip-flop circuits for the respective bits, and outputs "0" in a case of not coincide therebetween. Therefore, the exclusive OR circuit E11 outputs (0, 0) in a case where the values of the FIRST signal and the SECOND signal coincide with the values designated by the TIMING_COND<1:0> signal, respectively. In the other cases, the exclusive OR circuit E11 outputs (1, 0) (only coincident for the SECOND signal), (0, 1) (only coincident for the FIRST signal) or (1, 1) (not coincident for both the signals).

The error generation direction part 220 further has an AND circuit A11. The AND circuit A11 outputs the 2 bits of the output values of the exclusive OR circuit E11 as they are, in a case where the TIMING_MASK<1:0> signal that is output from the flip-flop circuit F11 is (1, 1). On the other hand, in a case where the TIMING_ MASK <1:0> signal that is output from the flip-flop circuit F11 is (1, 0), the AND circuit A11 outputs the first output value of the exclusive OR circuit E11 as it is, and outputs "0" for the second output value of the exclusive OR circuit E11 without regard to the original value. Similarly, in a case where the TIMING_ MASK <1:0> signal that is output from the flip-flop circuit F11 is (0, 1), the AND circuit A11 outputs "0" for the first output value of the exclusive OR circuit E11 without regard to the original value and outputs the second output value of the exclusive OR circuit E11 as it is. As mentioned above, the exclusive OR circuit E11 outputs (0, 0) in a case where the values of the FIRST signal and the SECOND signal coincide with the condition designated by the TIMING_COND<1:0> signal, respectively. Therefore, in a case where the TIMING_MASK<1:0> signal that is output from the flip-flop circuit F11 is (1, 1), the AND circuit A11 outputs (0, 0) when the above-mentioned condition is met. Otherwise, the AND circuit A11 outputs (1, 0), (0, 1) or (1, 1).

The error generation direction part 220 of FIG. 12 further has an all-bit logical 0 detection circuit D11. The all-bit logical 0 detection circuit D11 outputs "1" in a case where the output of the AND circuit A11 is (0, 0), and outputs "0" in the other cases. Therefore, the all-bit logical 0 detection circuit D11 outputs "1" in a case where the respective values of the FIRST signal and the SECOND signal meet the condition designated by the TIMING_COND<1:0> signal, and outputs "0" in the other cases.

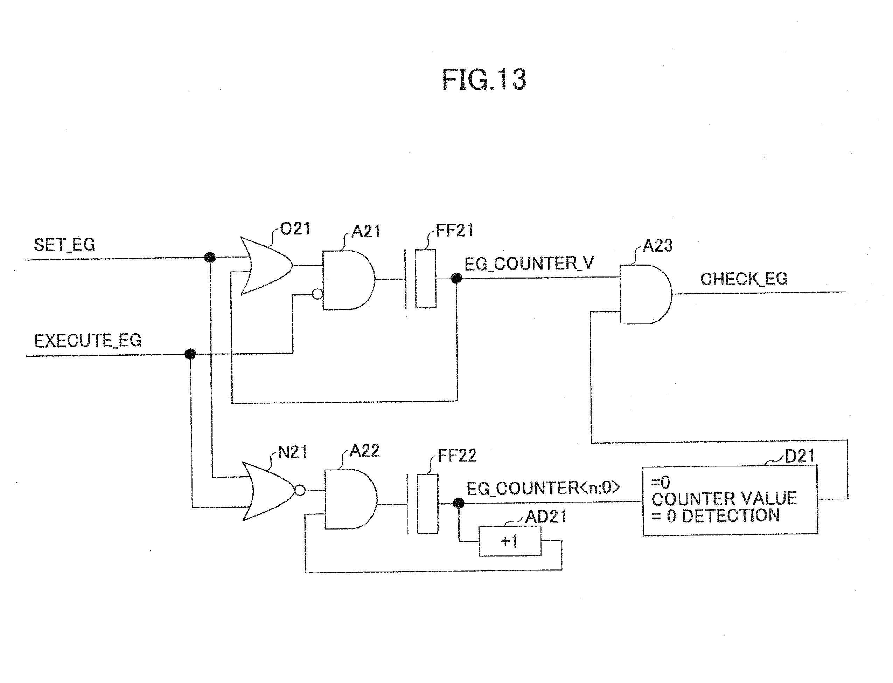

The error generation direction part 220 of FIG. 12 further has an AND circuit A12. To the AND circuit A12, the output of the all-bit logical 0 detection circuit D11, the output of the flip-flop circuit F14 and a CHECK_EG signal described later are input, and outputs an EXECUTE_EG signal described later. The CHECK_EG signal is the output of a timer circuit of FIG. 13 described later, and is a signal that designates a timing at which it is determined whether the FIRST signal and the SECOND signal meet the condition. The EXECUTE_EG signal is a signal that indicates an error generation direction (S28) that is output by the error generation direction part 220 to the instruction execution circuit 210. The AND circuit A12 outputs "1" (EXECUTE_EG = 1) in a case where the output of the all-bit logical 0 detection circuit D11 is "1", the output of the flip-flop circuit F14 is "1" and the CHECK_EG signal is "1". In the other cases, the AND circuit A12 outputs "0" (EXECUTE_EG = 0). Therefore, the EXECUTE_EG signal is asserted and an error generation direction is provided (S28) when the operator has provided an error setting direction (S24), the timing for determining for the above-mentioned condition has come (CHECK_EG = 1), and also the above-mentioned condition has been met. In the error generation direction part 220 of FIG. 12, the AND circuits A11, A12 and the all-bit logical 0 detection circuit D11 correspond to an error generation direction output part.

Next, with FIG. 13, a configuration example of a timer circuit as a determination direction part will be described. In the configuration example of FIG. 13, the timer circuit has an OR circuit 021 to which the SET_EG signal and the output value of a D-flip-flop circuit FF21 described later are input. The timer circuit further has an AND circuit A21 to which the output of the OR circuit 021 and the inverted signal of the EXECUTE_EG signal are input. The timer circuit further has the D-flip-flop circuit FF21 (hereinafter, simply referred to as a flip-flop circuit FF21) that holds the output of the AND circuit A21 and outputs it as an EG_COUNTER_V signal. The timer circuit further has an AND circuit A23 to which the output EG_COUNTER_V signal of the flip-flop circuit FF21 and the output of a counter 0 detection circuit D21 described later are input, and outputs the CHECK_EG signal. The AND circuit A23 outputs CHECK_EG = 1 each time the output of the counter 0 detection circuit D21 becomes "1", during the EG_COUNTER_V signal being "1".

The timer circuit further has a NOR circuit N21 to which the SET_EG signal and the EXECUTE_EG signal are input, and an AND circuit A22 of n+1 bits to which the output of the NOR circuit N21 and the output of an addition circuit AD21 described later are input. The n+1 bits of the output of the AND circuit A22 become "1", for the respective bits, in a case where both the n+1 bits of the output of the addition circuit AD21 and the n+1 bits of the output of the NOR circuit N21 are "1". The n+1 bits of the output of the AND circuit A22 become "0", respectively, for the respective bits, in a case where at least any ones of the n+1 bits of the output of the addition circuit AD21 and the n+1 bits of the output of the NOR circuit N21 are "0". Therefore, when the output of the NOR circuit N21 becomes "0", all of the n+1 bits of the output of the AND circuit A22 become "0" (are reset).

The timer circuit further has a D-flip-flop circuit FF22 of n+1 bits (hereinafter, simply referred to as a flip-flop circuit FF22) that holds the output of the AND circuit A22 and outputs it as a count value EG_COUNTER<n:0> of n+1 bits. A so-called wrap around function is provided in the timer circuit by which when addition is further carried out after all the bits of the count value EG_COUNTER<n:0> become "1" and the count value becomes 2ⁿ⁺¹, all the bits are reset to "0" automatically.

The timer circuit further has the addition circuit AD21 that adds "1" to the output value of the flip-flop circuit FF22 every clock cycle of the computer. The addition circuit AD21 has a function of counting clock cycles. The timer circuit further has the counter 0 detection circuit D21 that detects that all the bits of the output (count value) of the flip-flop circuit F22 are "0", i.e., the output value is "0".

In the timer circuit of FIG. 13, the NOR circuit N21, the AND circuit A22, the flip-flop circuit FF22 and the addition circuit AD21 correspond to a counting part. Further, the OR circuit 021, the AND circuit A21 and the flip-flop circuit FF21 correspond to an output gate part. Further, the counter 0 detection circuit D21 and the AND circuit A23 correspond to a direction output part.

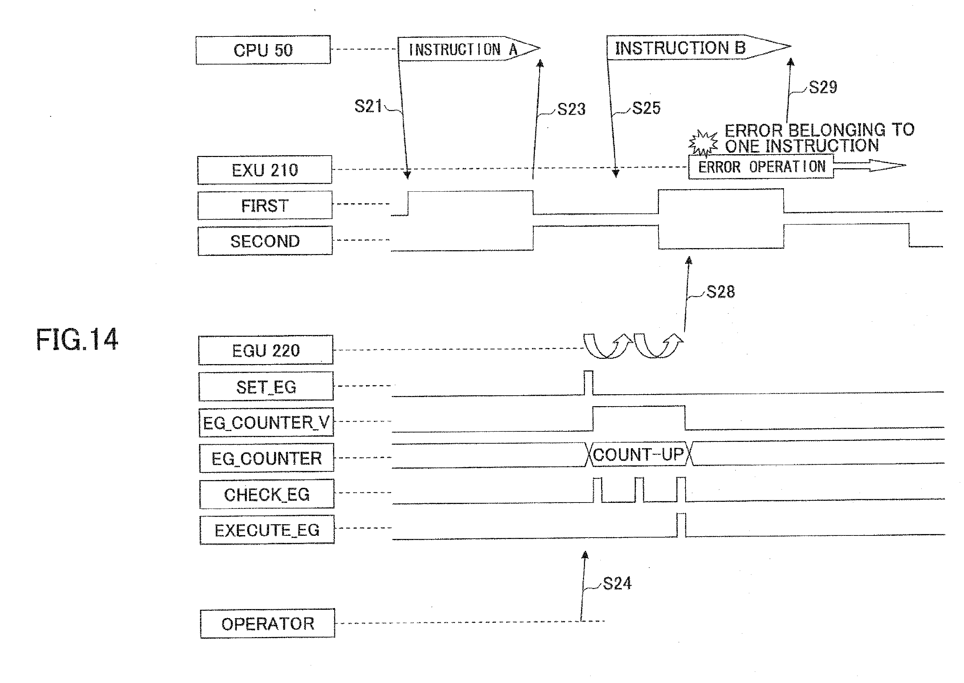

Next, operations of the timer circuit will be described. The OR circuit 021 outputs "1" when the SET_EG signal is "1" or the output (EG_COUNTER_V signal) of the flip-flop circuit FF21 is "1". The AND circuit 21 outputs "1" when the output of the OR circuit 021 is "1" and also the EXECUTE_EG signal is "0". Therefore, when the SET_EG signal has been asserted by an error setting direction of an operator, the OR circuit 021 outputs "1". At this point of time, the EXECUTE_EG signal has not been asserted yet ("0"). Therefore, the AND circuit A21 outputs "1", the flip-flop circuit FF21 holds "1" (EG_COUNTER_V = 1), and EG_COUNTER_V = 1 is input to the OR circuit 021. Therefore, the OR circuit 021 continues to output "1" even when the SET_EG signal is negated, and after that, the AND circuit A21 outputs "1" until the EXECUTE_EG signal is asserted. As a result, the EG_COUNTER_V signal that is the output value of the flip-flop circuit FF21 thereafter retains "1" until the EXECUTE_EG signal is asserted (see FIG. 14 described later). During the time, EG_COUNTER_V = 1 is input to the AND circuit A23, which outputs CHECK_EG signal = 1 each time the output of the counter 0 detection circuit D21 becomes "1".

Further, in the timer circuit, the NOR circuit N21 outputs "1" in a case where both the SET_EG signal and the EXECUTE_EG signal are "0", and outputs "0" in a case where at least any one thereof is "1". As mentioned above, when the NOR circuit N21 outputs "0", all the n+1 bits of the output of the AND circuit A22 are reset to "0". When all the n+1 bits of the output of the AND circuit A22 are reset to "0", the count value EG_COUNTER<n:0> is reset to zero via the flip-flop circuit FF22, and the zero resetting of the count value EG_COUNTER<n:0> is detected by the counter 0 detection circuit D21. As a result, the AND circuit A23 outputs CHECK_EG = 1 under the condition that the EG_COUNTER_V signal is "1".

Thus, as a result of SET_EG = 1 or EXECUTE_EG = 1, the count value EG_COUNTER<n:0> is reset to zero via the NOR circuit N21 and the AND circuit A22. Therefore, when the operator provides an error setting direction (S24), the count value EG_COUNTER<n:0> is reset to zero, and after that, is reset to zero by the wrap around function every 2ⁿ⁺¹ clock cycles of the computer. Each time the count value EG_COUNTER<n:0> is reset to zero, the counter 0 detection circuit D21 detects the zero resetting, and the AND circuit A23 outputs CHECK_EG = 1 under the condition of EG_COUNTER_V = 1.

When the error generation condition is met at a timing of the AND circuit A23 thus outputting CHECK_EG = 1, the AND circuit A12 of FIG. 12 outputs EXECUTE_EG = 1. As a result, the error setting direction part 220 provides an error generation direction to the instruction execution part 210. Further, in the timer circuit of FIG. 13, the output of the AND circuit A21 becomes "0" by the signal of EXECUTE_EG = 1, the output EG_COUNTER_V of the flip-flop circuit FF21 becomes "0", and the output of the AND circuit A23 becomes "0". As a result, after that, without regard to the output of the counter 0 detection circuit D31, the AND circuit A23 continues to output CHECK_EG = 0, until the SET_EG signal becomes "1" as a result of the operator again providing an error setting direction. As a result, during the AND circuit A23 continuing to output CHECK_EG = 0, the error generation direction part 220 of FIG. 12 outputs EXECUTE_EG = 0, and does not provide an error generation direction. It is noted that for the purpose of convenience of explanation, below, it is assumed that an error generation condition is such that, as in step S42 of FIG. 7, the FIRST signal and the SECOND signal are (1, 0), i.e., the instruction execution part 210 is executing the first half of the execution process of an instruction.

When the operator provides an error setting direction (S24), EG_COUNTER_V = 1 is obtained from a signal of SET_EG = 1. Simultaneously, the output of the NOR circuit N21 becomes "0", all the n+1 bits of the AND circuit A22 become "0", and the count value EG_COUNTER<n:0> = 0 is obtained (resetting is carried out) via the flip-flop circuit FF22. The resetting of the count value EG_COUNTER<n:0> is detected by the counter 0 detection circuit D21, and also due to EG_COUNTER_V = 1, the AND circuit A23 outputs CHECK_EG = 1. Therefore, when the operator provides an error setting direction, the AND circuit A23 outputs CHECK_EG = 1. When at this point of time, the FIRST signal and the SECOND signal are (1, 0), that is, the error generation condition is met, the AND circuit A12 of FIG. 12 outputs EXECUTE_EG = 1. As a result, the error setting direction part 220 provides an error generation direction to the instruction execution part 210.

On the other hand, the operator provides an error setting direction (SET_EG = 1) and the AND circuit A23 outputs CHECK_EG = 1. When at this point of time, the FIRST signal and the SECOND signal are not (1, 0), that is, the error generation condition is not met, the AND circuit A12 of FIG. 12 does not output EXECUTE_EG = 1. As a result, the error setting direction part 220 does not provide an error generation direction to the instruction execution part 210. In this case, since EXECUTE_EG = 1 is not output, the AND circuit A21 continues to output "1", and EG_COUNTER_V = 1 is maintained. Further, after the count value EG_COUNTER<n:0> is reset to zero through the NOR circuit N21 as a result of SET_EG = 1, counting is carried out by the flip-flop circuit FF22 and the addition circuit AD21. As a result, as mentioned above, every 2ⁿ⁺¹ clock cycles, the count value EG_COUNTER<n:0> is reset to zero, and each time, determination for the condition of the FIRST signal and the SECOND signal is carried out. When the condition is met there, the AND circuit A12 of FIG. 12 outputs EXECUTE_EG = 1. As a result, the error generation direction part 220 provides an error generation direction to the instruction execution part 210.

FIG. 14 is a time chart illustrating operations of the error generation direction part 220 described above with FIGs. 12 and 13. It is to be noted that it is assumed that the TIMING_MASK<1:0> signal is (1, 1), the TIMING_COND<1:0> signal is (1, 0) and the EG_ENABLE signal is "1", which have been described above with FIG. 12. In FIG. 14, when an execution direction for an instruction A is provided by the CPU 50 (step S21), execution of the instruction A is started (see FIG. 5). As a result, the FIRST signal becomes "1", and the SECOND signal is maintained as "0". After that, when the first half of the execution process of the instruction A is completed, the instruction execution part 210 of the storage unit 200 carries out completion reporting to the CPU 50 (step S23). At this point of time, the FIRST signal becomes "0", and the SECOND signal becomes "1". The CPU 50 receives the completion reporting, and provides an execution direction for an instruction B (step S25). The instruction execution part 210 receives the execution direction for the instruction B and starts execution of the instruction B after completing the second half of the execution process of the instruction A (step S27, see FIG. 5). As a result, the FIRST signal becomes "1" and the SECOND signal becomes "0".

Here, as depicted in FIG. 14, it is assumed that an error setting direction (step S24) is input by the operator after the completion reporting for the instruction A is provided (step S23) and before the execution direction for the instruction B is provided (step S25). As a result, SET_EG = 1 is obtained, EG_COUNTER_V = 1 is obtained in the timer circuit of FIG. 13, and zero resetting of the count value EG_COUNTER<n:0> is carried out. Therefore, the AND circuit 23 outputs CHECK_EG = 1. Further, the output of the flip-flop circuit FF14 of the error generation direction part 220 of FIG. 12 becomes "1". Therefore, the two inputs other than the output of the all-bit logical 0 detection circuit D11 of the three inputs of the AND circuit 12 become "1", and as a result, the output of the all-bit logical 0 detection circuit D11 is output, as it is, as the EXECUTE_EG signal. Since the FIRST signal = 0 and the SECOND signal = 1 at this point of time, the output of the exclusive OR circuit E11 becomes (1, 1). As a result, the output of the AND circuit A11 becomes (1, 1), and the output of the all-bit logical 0 detection circuit D11 becomes "0". As a result, the AND circuit A12 outputs EXECUTE_EG = 0, and no error generation direction is provided by the error generation direction part 220. That is, the error generation condition is not met, and no error generation direction is provided at this point of time.

As a result, after the count value EG_COUNTER<n:0> of the timer circuit of FIG. 13 is reset to zero, it is incremented every clock cycle. That is, a waiting for the certain time (for 2ⁿ⁺¹ times of clock cycles) is carried out. Further, the EG_COUNTER_V signal is maintained as "1". Then, when the count value EG_COUNTER<n:0> has reached 2ⁿ⁺¹, the count value is reset to zero by the wrap around function, and the AND circuit A23 outputs CHECK_EG = 1. Further, the output of the flip-flop circuit FF14 of the error generation direction part 220 of FIG. 12 is maintained as "1". Therefore, the two inputs other than the output of the all-bit logical 0 detection circuit D11 of the three inputs of the AND circuit 12 become "1", and the AND circuit 12 outputs the output of the all-bit logical 0 detection circuit D11, as it is, as the EXECUTE_EG signal. Therefore, when the FIRST signal = 1 and the SECOND signal = 0 are obtained at this point of time, the output of the exclusive OR circuit E11 becomes (0, 0), as a result the output of the AND circuit A11 become (0, 0), and the output of the all-bit logical 0 detection circuit D11 becomes "1". As a result, the AND circuit A12 outputs EXECUTE_EG = 1, and an error generation direction is output from the error generation direction part 220 (step S28). Thus, the error generation condition is met, and the error generation direction is provided.

On the other hand, when the FIRST signal = 0 and the SECOND signal = 1 are still obtained, i.e., the error generation condition is not met also at the point of time of the count value EG_COUNTER<n:0> reaching 2ⁿ⁺¹, being reset to zero by the wrap around function and CHECK_EG = 1 being obtained as mentioned above, the output of the exclusive OR circuit E11 of the error generation direction part 220 of FIG. 12 becomes (1, 1). As a result, the output of the AND circuit A11 becomes (1, 1), and the output of the all-bit logical 0 detection circuit D11 becomes "0". As a result, the AND circuit A12 outputs EXECUTE_EG = 0, and no error generation direction is provided by the error generation direction part 220.

As a result, after the count value EG_COUNTER<n:0> of the timer circuit of FIG. 13 is reset to zero again by the wrap around function, it is incremented every clock cycle. That is, a waiting for the certain time is carried out again. Further, the EG_COUNTER_V signal is maintained as "1". Then, when the count value EG_COUNTER<n:0> has reached 2ⁿ⁺¹, the count value is reset to zero by the wrap around function, and CHECK_EG = 1 is obtained. Further, the output of the flip-flop circuit FF14 of the error generation direction part 220 of FIG. 12 has been maintained as "1". Therefore, the two inputs other than the output of the all-bit logical 0 detection circuit D11 of the three inputs of the AND circuit 12 become "1", and the AND circuit A12 outputs the output of the all-bit logical 0 detection circuit D11, as it is, as the EXECUTE_EG signal. Therefore, when the FIRST signal = 1 and the SECOND signal = 0 are obtained, i.e., the error generation condition is met, at this point of time, the output of the exclusive OR circuit E11 becomes (0, 0), as a result the output of the AND circuit A11 become (0, 0), and the output of the all-bit logical 0 detection circuit D11 becomes "1". As a result, the AND circuit A12 outputs EXECUTE_EG = 1, and an error generation direction is output from the error generation direction part 220 (step S28).

In the operation example of FIG. 14, as mentioned above, the instruction execution part 210 is executing the second half of the execution process of the instruction A at the point of time of the operator's error setting direction (step S24) (the pulse of the SET_EG signal and the first pulse of the CHECK_EG signal). Therefore, FIRST = 0 and SECOND = 1 are obtained, the error generation condition is not met, and "0" of the EXECUTE_EG signal is maintained. Next, also at the point of time of the first finish of waiting for the certain time (the second pulse of the CHECK_EG signal), the instruction execution part 210 is still executing the second half of the execution process of the instruction A. Therefore, FIRST = 0 and SECOND = 1 are obtained, the error generation condition is not met, and "0" of the EXECUTE_EG signal is maintained. Next, before the point of time of the second finish of waiting for the certain time (the third pulse of the CHECK_EG signal), the instruction execution part 210 comes to be executing the first half of the execution process of the instruction B. Therefore, FIRST = 1 and SECOND = 0 are obtained, the error generation condition is met, and the EXECUTE_EG signal becomes "1" (the pulse of the EXECUTE_EG signal). Therefore, the error generation direction part 220 outputs an error generation direction (step S28). As a result, in the instruction execution part 210, an error that is treated as an error concerning one instruction (an error belonging to one instruction) is generated.

When the error generation direction is thus provided, the EG_COUNTER_V signal of the timer circuit of FIG. 13 becomes "0" by the signal of EXECUTE_EG = 1. As a result, after that, the AND circuit A23 outputs CHECK_EG = 0 without regard to the output of the counter 0 detection circuit D21 until SET_EG = 1 is obtained again from an error setting direction (step S24) of the operator. Therefore, until SET_EG = 1 is obtained again from an error setting direction (step S24) of the operator, the AND circuit A12 of the error generation direction part 220 of FIG. 12 outputs EXECUTE_EG = 0, and the error generation direction part 220 does not output an error generation direction.

Thus, by the error generation direction part 220 of the embodiment, determination for the condition in the instruction execution part 210 is carried out (step S42) based on the FIRST signal and the SECOND signal when an error setting direction (step S24, step S41 of FIG. 7) is input by the operator. When the condition is met, the error generation direction part 220 outputs an error generation direction to the instruction execution part 210 (step S28, S44). On the other hand, when the condition is not met, the error generation direction part 220 does not provide an error generation direction, and again carries out determination (step S42) after waiting for the certain time (step S43). When as a result, the condition is met, the error generation direction part 220 outputs an error generation direction to the instruction execution part 210 (step S28, S44). On the other hand, when the condition is not met, the error generation direction part 220 does not provide an error generation direction, and operations of again carrying out determination (step S42) after again waiting for a certain time (step S43) are repeated until a state of the condition being met. As a result, the error generation direction part 220 outputs an error generation direction only in a case where the condition is met in the instruction execution part 210. Further, a timing of outputting an error generation direction is a timing of an error setting direction being input by the operator, or a timing of completion of thereafter waiting for the certain time. Therefore, an error generation direction is provided asynchronously from operations of the CPU 50 (reception of completion reporting for an instruction, and/or the like) and operations of the instruction execution part 210 (completion of the first half of the execution process of an instruction, completion reporting for an instruction, completion of the second half of the execution process of an instruction, and/or the like). As a result, it is possible to carry out testing for operations of the system of a time of an error occurring, for various situations in the CPU 50 and the instruction execution part 210.

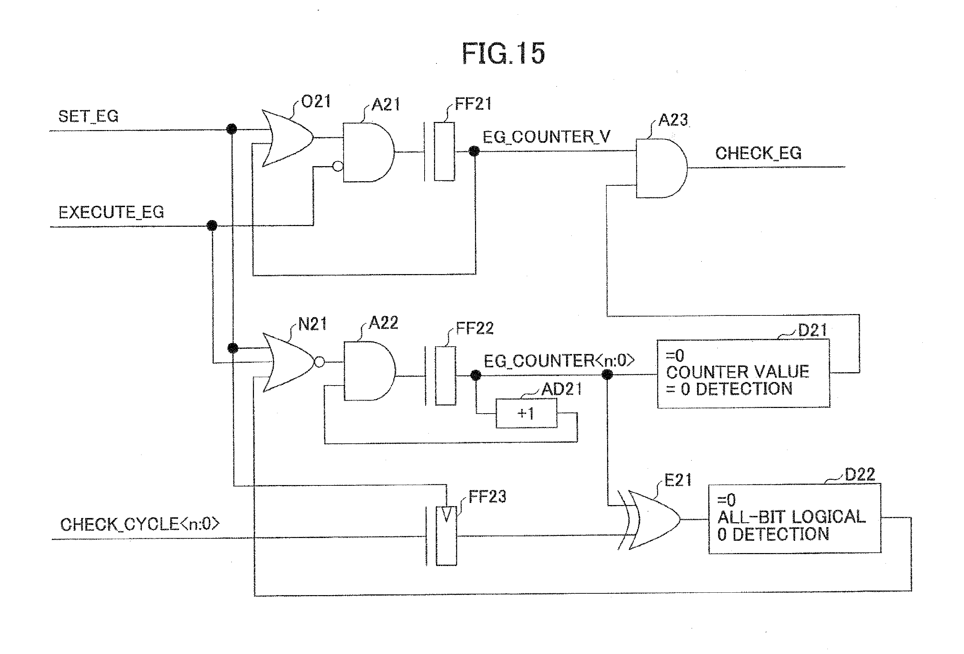

FIG. 15 is a circuit diagram of a first variant example of the timer circuit in the embodiment described above with FIG. 13. A point of difference from the timer circuit of FIG. 13 is that a D-flip-flop circuit FF23 of n+1 bits (hereinafter, simply referred to as a flip-flop circuit FF23), an exclusive OR circuit E21 of n+1 bits (hereinafter, simply referred to as an exclusive OR circuit E21) and an all-bit logical 0 detection circuit D22 are provided. To the flip-flop circuit F23, a CHECK_CYCLE<n:0> signal is input. The CHECK_CYCLE<n:0> signal is a signal that indicates a numerical value that is set by an operator. By setting the CHECK_CYCLE<n:0> signal, the operator can set a count value of a time of the count value EG_COUNTER<n:0> being reset to zero, into any value less than or equal to 2ⁿ⁺¹.

The count value EG_COUNTER<n:0> in the timer circuit of FIG. 13 is reset to zero every 2ⁿ⁺¹ times of clock cycles by the wrap around function, other than a case of being reset to zero by SET_EG = 1 or EXECUTE_EG = 1. In contrast thereto, in the timer circuit of FIG. 15, the count value EG_COUNTER<n:0> is compared with the setting value that is set in the flip-flop circuit FF23. When both values coincide for all the bits as a result of the comparison, all the bits of the output of the exclusive OR circuit E21 become "0". This is detected by the all-bit logical 0 detection circuit D22, and "1" is output to the NOR circuit N21. The NOR circuit N21 receives the output of the all-bit logical 0 detection circuit D22 and outputs "0". As a result, the count value EG_COUNTER<n:0> is reset to zero. Therefore, the count value EG_COUNTER<n:0> in the timer circuit of FIG. 15 is reset to zero when the count value EG_COUNTER<n:0> has reached the setting value of the CHECK_CYCLE<n:0>, other than a case of being reset to zero by SET_EG = 1 or EXECUTE_EG = 1. Therefore, the operator can freely set the waiting time of a time of the error generation direction part 220 waiting for a certain time since the instruction execution part 210 does not meet the condition at a point of time of an error setting direction (S24), by setting CHECK_CYCLE<n:0>.

According to the timer circuit of the first variant example of FIG. 15, the operator can freely set the waiting time. Therefore, in comparison to the timer circuit of FIG. 13 in which the waiting time is fixed, it is possible to carry out testing for operations of the system of the computer including the CPU 50 and the instruction execution part 210 of a time of an error occurring, in various situations.

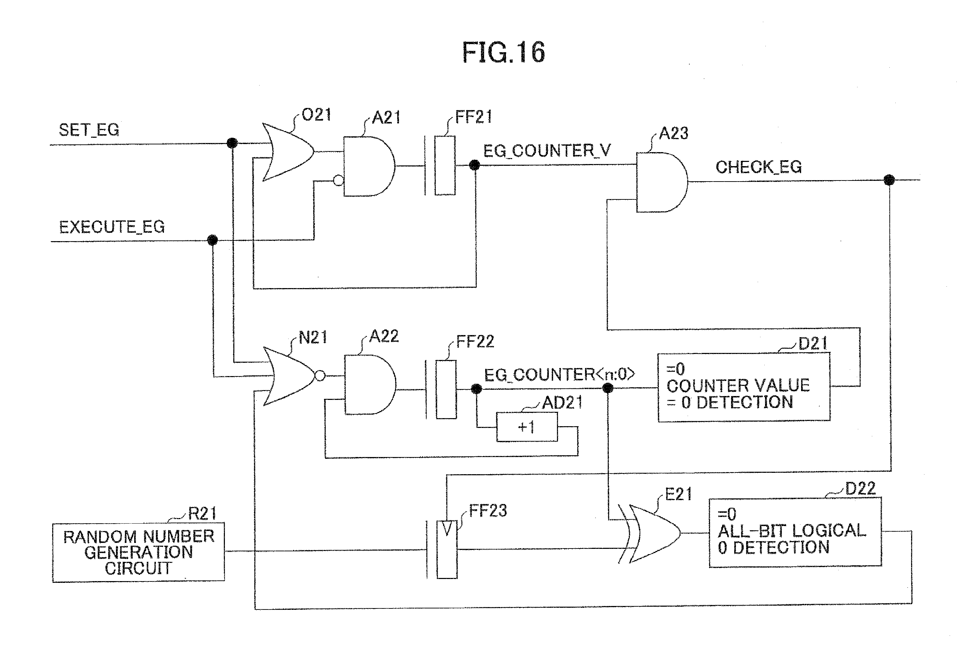

FIG. 16 is a circuit diagram of a second variant example of the timer circuit in the embodiment described above with FIG. 13. A point of being difference from the timer circuit of the first variant example of FIG. 15 is that the input of the flip-flop circuit FF23 is not CHECK_CYCLE<n:0> but the output of a random number generation circuit R21 of n+1 bits (hereinafter, simply referred to as a random number generation circuit R21) that is newly provided. In this case, a count value of a time of the count value EG_COUNTER<n:0> being reset to zero is set to be a value less than or equal to 2ⁿ⁺¹ in a random manner by the random number generating circuit R21.

That is, in the timer circuit of FIG. 16, similar to the timer circuit of FIG. 15, the count value EG_COUNTER<n:0> is compared with the setting value that is set in the flip-flop circuit FF23. When both values coincide for all the bits as a result of the comparison, all the bits of the output of the exclusive OR circuit E21 become "0". This is detected by the all-bit logical 0 detection circuit D22, and "1" is output to the NOR circuit N21. The NOR circuit N21 receives the output of the all-bit logical 0 detection circuit D22 and outputs "0". As a result, the count value EG_COUNTER<n:0> is reset to zero. Therefore, the count value EG_COUNTER<n:0> in the timer circuit of FIG. 16 is reset to zero when the count value EG_ COUNTER<n:0> has reached the output value of the random number generation circuit R21, other than a case of being reset to zero by SET_EG = 1 or EXECUTE_EG = 1. Therefore, the waiting time of a time of the error generation direction part 220 waiting for a certain time since the instruction execution part 210 does not meet the condition at a point of time of an error setting direction (S24) is set by the random number generation circuit R21.

By the timer circuit of the second variant example of FIG. 16, the waiting time is set in a random manner each time by the random number generation circuit R21. Therefore, in comparison to the timer circuit of FIG. 13 in which the waiting time is fixed, it is possible to carry out testing for operations of the system of the computer including the CPU 50 and the instruction execution part 210 of a time of an error occurring, easily in various situations.

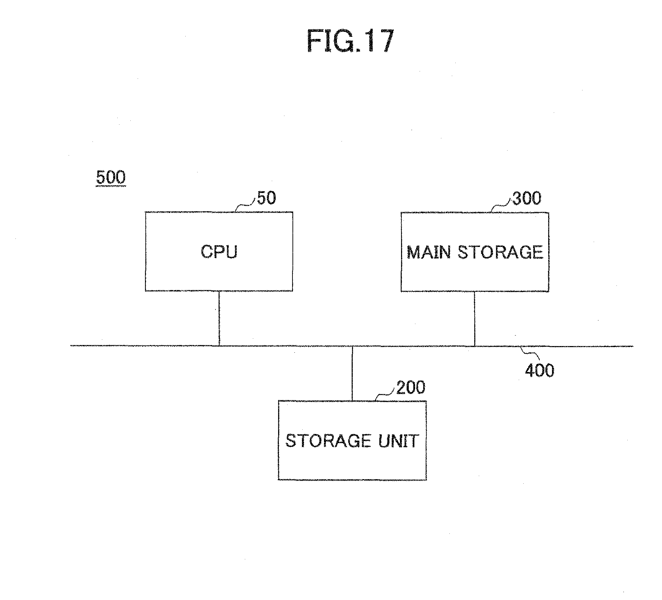

FIG. 17 is a block diagram depicting a configuration example of a computer as an information processing apparatus according to an embodiment. In the configuration example of FIG. 17, the computer 500 has a CPU 50, a main storage 300 and a storage unit 200. The CPU 50, the main storage 300 and the storage unit 200 are mutually connected by a bus 400. The main storage 300 stores instructions and/or the like. The CPU 50 corresponds to the CPU 50 depicted in FIGs. 4 and 8. The CPU 50 reads an instruction from the main storage 300, and in a case where the read instruction is a reading/writing instruction of data for the storage unit 200, the CPU 50 provides an execution direction for the instruction to the storage unit 200. The storage unit 200 corresponds to the storage unit 200 depicted in FIG. 4, and includes the instruction execution part 210 depicted in FIG. 9 and the error generation direction part 220 described above with FIGs. 12 and 13. Configurations and details of operations of the instruction execution part 210 and the error generation direction part 220 are the same as or similar to those described above with FIGs. 4 through 16.

### DESCRIPTION OF REFERENCE NUMERALS

50 CPU
51 instruction control part
52 main storage control part
53 internal operation execution part
200 storage unit
210 instruction execution part
211 instruction state reporting circuit
212 large capacity storage control part
213 primary buffer part
214 error insertion part
215 large capacity storage
220 error generation direction part
300 main storage
FF1, FF2, FF11, FF12, Ff13, FF14, FF21, FF22, FF23 flip-flop circuits
A11, A12, A21, A22, A23 AND circuits
AD21 addition circuit
D11, D22 all-bit logical 0 detection circuits
D21 counter 0 detection circuit
E11, E21 exclusive OR circuits
021 OR circuit
N21 NOR circuit
R21 random number generation circuit

## Claims

1. An error generation direction circuit comprising:
an error generation condition determination part that determines whether or not an instruction execution part that executes an instruction from a processor meets an error generation condition;
a determination direction part that, when an error setting direction that directs to set an error has been input, outputs a determination direction to cause the error generation condition determination part to determine whether or not the instruction execution part meets the error generation condition, and, in a case where the error generation condition is not met when the error setting direction has been input, again outputs, after a predetermined time has elapsed from the output of the determination direction, the determination direction to the error generation condition determination part; and
an error generation direction output part that outputs an error generation direction to the instruction execution part in a case where the instruction execution part meets the error generation condition by determination of the error generation condition determination part.

2. The error generation direction circuit according to claim 1, wherein
the error generation condition determination part determines that the error generation condition is met during time from receiving an execution direction for each instruction from the processor until carrying out completion reporting for the instruction to the processor, and determines that the error generation condition is not met during time of further continuing to execute the instruction after having carried out the completion reporting to the processor.

3. The error generation direction circuit according to claim 1 or 2, further comprising
a time setting part that generates a random number and sets the predetermined time based on the random number.

4. The error generation direction circuit according to any one of claims 1 through 3, wherein
the determination direction part includes a counting part that resets a count value to zero when the error setting direction has been input and counts clocks, and resets the count value to zero when the count value reaches a predetermined value;
a direction output part that outputs the determination direction to the error generation condition determination part when the count value of the counting part is reset to zero; and
an output gate part that enables the direction output part to output the determination direction by input of the error setting direction, and disables the direction output part from outputting the determination direction by the error generation direction that is output by the error generation direction output part.

5. A storage unit comprising:
a storage part that stores information;
an instruction execution part that executes at least any one process of writing information to the storage part and reading information from the storage part according to an instruction from a processor;
an error generation condition determination part that determines whether or not the instruction execution part meets an error generation condition;
a determination direction part that, when an error setting direction has been input, outputs a determination direction to cause the error generation condition determination part to determine whether or not the error generation condition is met, and, in a case where the error generation condition is not met when the error setting direction has been input, again outputs, after a predetermined time has elapsed, the determination direction to the error generation condition determination part; and
an error generation direction output part that outputs an error generation direction to the instruction execution part in a case where the error generation condition is met by determination of the error generation condition determination part.

6. The storage unit according to claim 5, wherein
the error generation condition determination part determines that the error generation condition is met during time from receiving an execution direction for each instruction from the processor until carrying out completion reporting for the instruction to the processor, and determines that the error generation condition is not met during time of further continuing to execute the instruction after having carried out the completion reporting.

7. The storage unit according to claim 5 or 6, further comprising
a time setting part that generates a random number and sets the predetermined time based on the random number.

8. The storage unit according to any one of claims 5 through 7, wherein
the determination direction part includes a counting part that resets a count value to zero when the error setting direction has been input and counts clock cycles, and resets the count value to zero when the count value reaches a predetermined value corresponding to the predetermined time;
a direction output part that outputs the determination direction to the error generation condition determination part when the count value of the counting part is reset to zero; and
an output gate part that enables the direction output part to output the determination direction by input of the error setting direction, and disables the direction output part from outputting the determination direction by the error generation direction that is output by the error generation direction output part.

9. An information processing apparatus comprising:
a processor;
a storage part that stores information;
an instruction execution part that executes at least any one process of writing information to the storage part and reading information from the storage part according to an instruction from the processor;
an error generation condition determination part that determines whether or not the instruction execution part meets an error generation condition;
a determination direction part that, when an error setting direction has been input, outputs a determination direction to cause the error generation condition determination part to determine whether or not the error generation condition is met, and, in a case where the error generation condition is not met when the error setting direction has been input, again outputs, after a predetermined time has elapsed, the determination direction to the error generation condition determination part; and
an error generation direction output part that outputs an error generation direction to the instruction execution part in a case where the error generation condition is met by determination of the error generation condition determination part.

10. The information processing apparatus according to claim 9, wherein
the error generation condition determination part determines that the error generation condition is met during time from receiving an execution direction for each instruction from the processor until carrying out completion reporting for the instruction to the processor, and determines that the error generation condition is not met during time of further continuing to execute the instruction after having carries out the completion reporting.

11. The information processing apparatus according to claim 9 or 10, further comprising
a time setting part that generates a random number and sets the predetermined time based on the random number.

12. The information processing apparatus according to any one of claims 9 through 11, wherein
the determination direction part includes a counting part that resets a count value to zero when the error setting direction has been input and counts clock cycles, and resets the count value to zero when the count value reaches a predetermined value corresponding to the predetermined time;
a direction output part that outputs the determination direction to the error generation condition determination part when the count value of the counting part is reset to zero; and
an output gate part that enables the direction output part to output the determination direction by input of the error setting direction, and disables the direction output part from outputting the determination direction by the error generation direction that is output by the error generation direction output part.

13. A control method of an error generation direction circuit that provides an error generation direction to an instruction execution part that executes an instruction from a processor, the control method comprising:
the step of, when an error setting direction has been input, a determination direction part outputting a determination direction to cause an error generation condition determination part to determine whether or not the error generation condition is met;
the step of, in response to the determination direction, the error generation condition determination part determining whether or not the instruction execution part that executes an instruction from the processor meets the error generation condition;
the step of, in a case where it has been determined, when the error setting direction has been input, that the error generation condition is not met, outputting the determination direction to the error generation condition determination part again after a predetermined time has elapsed; and
the step of an error generation direction part outputting an error generation direction to the instruction execution part in a case where the error generation condition is met by determination of the error generation condition determination part.

14. The control method of the error generation direction circuit according to claim 13, wherein
in the step carried out by the error generation condition determination part, it is determined that the error generation condition is met during time from receiving an execution direction for each instruction from the processor until carrying out completion reporting for the instruction to the processor, and it is determined that the error generation condition is not met during time of further continuing to execute the instruction after carrying out the completion reporting.
